# EUROPÄISCHE PATENTSCHRIFT

(11) **EP 2 557 288 B1**
(45) Veröffentlichungstag und Bekanntmachung des Hinweises auf die Patenterteilung: **08.04.2015**
(21) Anmeldenummer: 12179612.2
(22) Anmeldetag: 08.08.2012
(51) Int. Cl.: F01N 3/20

(54) **Vorrichtung und Verfahren zur Abgasreinigung für Verbrennungskraftmaschinen**
Device and method for purifying waste gas for combustion engines
Dispositif et procédé de nettoyage de gaz d'échappement pour moteurs à combustion interne

(30) Priorität: 09.08.2011 DE 102011109761
(43) Veröffentlichungstag der Anmeldung: 13.02.2013
(73) Patentinhaber: Universität Stuttgart, 70199 Stuttgart (DE)
(72) Erfinder: Eigenberger, Prof. Dr.-Ing. Gerhart, 67435 Neustadt (DE); Nieken, Prof. Dr.-Ing. Ulrich, 67434 Neustadt (DE); Rink, Dipl.-Ing. Matthias, 72764 Reutlingen (DE); Matschke, Stefan, 71640 Ludwigsburg (DE)
(74) Vertreter: Schmid, Wolfgang

(56) Entgegenhaltungen:
- WO-A1-2008/072013
- FR-A1- 2 813 096
- JP-A- 2007 198 706

## Beschreibung

Die Erfindung betrifft eine Vorrichtung zur Abgasreinigung für Verbrennungskraftmaschinen. Des Weiteren betrifft die Erfindung ein Verfahren zur Abgasreinigung für Verbrennungskraftmaschinen.

Katalytische Abgasreinigungseinheiten für Verbrennungskraftmaschinen arbeiten nur in einem bestimmten Bereich der Motorabgastemperatur optimal. Bei Kaltstart des Motors oder bei Schwachlast ist die Motorabgastemperatur insbesondere bei mager betriebenen Verbrennungskraftmaschinen oder bei Erdgasmotoren häufig so niedrig, dass für einen ausreichenden Schadstoffumsatz ein überproportional hoher Edelmetallgehalt der Abgaskatalysatoren benötigt wird, was mit entsprechenden Kosten verbunden ist.

Nach dem derzeitig in Serienfahrzeugen realisierten Stand der Technik werden die für eine ausreichende Abgasreinigung notwendigen Abgastemperaturen hauptsächlich mit Hilfe der elektronischen Motorsteuerung eingestellt. Das führt zu einem erhöhten Kraftstoffverbrauch, wenn die Abgasreinigung eine Anhebung der Abgastemperatur erfordert. Gleichzeitig wird durch Anforderungen der Abgasreinigung verhindert, dass die Motorsteuerung ausschließlich auf einen optimalen, verbrauchsarmen Fahrbetrieb optimiert werden kann.

Daher wurden wiederholt sog. wärmeintegrierte Abgasreinigungskonzepte vorgeschlagen, bei denen eine getrennte Wärmezufuhr in Verbindung mit einem Gegenstromwärmetauscher in die Abgasanlage integriert wird, sodass das geeignete Temperaturniveau bei zu niedriger Abgastemperatur durch die zusätzliche Wärmezufuhr angehoben wird. Dabei wird die erforderliche Wärmezufuhr dadurch minimiert, dass ein Wärmetauscher vor den Abgasreinigungskomponenten angeordnet wird, der die Wärme des aus der Abgasreinigungseinheit austretenden heißeren Abgases auf das Motorabgas überträgt. Beispiele dafür finden sich in DE 195 03 989 A1 (VW/König), US 6,207,116 B1 (Heed), DE 101 05 185 A1 (Bosch), DE 101 37 050 A1 (Bosch), DE 102 21 174 B4 (Eberspächer), DE10 2007 053 130 A1 (Daimler) und EP 1 625 285 B1 (UStutt).

So war es in EP 1 625 285 B1 das Ziel, ein Verfahren aufzuzeigen, wie die für Otto-Magermotoren und Dieselmotoren erforderlichen unterschiedlichen Abgasbehandlungsschritte in einer von der Motorsteuerung unabhängigen Abgasbehandlungseinheit mit katalytischem Kraftstoffbrenner und integriertem Wärmeaustausch zusammengefasst werden können, sodass die eigentliche Motorsteuerung den Motorbetrieb unabhängig von der Abgasnachbehandlung optimieren kann.

Allerdings hat keines der vorstehenden genannten wärmeintegrierten Konzepte bisher Eingang in Serienfahrzeuge gefunden. Als Gründe dafür kann der apparative Mehraufwand, der durch den Abgaswärmetauscher verursachte zusätzliche Druckverlust, die durch den Wärmetauscher verursachte thermische Trägheit bei Kaltstart des Motors sowie Einschränkungen aufgrund der in einem sehr weiten Bereich veränderlichen Motor-Betriebsbedingungen genannt werden.

Vielmehr wurden die vorhandenen Abgasreinigungskonzepte insbesondere in ihrem Kaltstartverhalten durch motornahe Anordnung von Katalysatoren, durch Weiterentwicklung von Katalysatoren und durch eine auf die Abgasreinigung hin optimierte Motorsteuerung weiter verbessert. Trotzdem ist abzusehen, dass die künftig geltenden Abgasgrenzwerte auf diese Weise nur zu erreichen sind, wenn auf eine weitere Verbrauchsoptimierung der Motoren verzichtet wird. Das gilt insbesondere für Dieselmotoren und für Otto-Magermotoren, bei denen die Abgastemperatur generell niedriger liegt, sowie für Erdgasmotoren, die zur Verbrennung von nicht umgesetztem Methan Abgastemperaturen um/über 400°C benötigen.

In diesen bekannten Konzepten für wärmeintegrierte Abgasbehandlungsanlagen wird das Motorabgas zunächst durch die Einströmkanäle des Wärmetauschers geleitet und trifft dann auf die in den Wärmetauscher integrierten oder dahinter angeordneten Abgasreinigungseinheiten wie Oxidationskatalysator, Partikelfilter und DeNOx-Katalysatoren. Das aus den Abgasreinigungseinheiten austretende Abgas strömt anschließend durch die Ausströmkanäle des Wärmetauschers und überträgt seine Wärme auf den Zulauf. Diese Anordnung hat den Nachteil, dass beim Motorkaltstart das sich langsam erwärmende Motorabgas zunächst auf die kalten Einströmkanäle des Wärmetauschers trifft, sodass die Erwärmung der dahinter angeordneten Abgasreinigungseinheiten nur verzögert stattfindet. Daher ist eine zusätzliche Wärmeeintragseinheit, meist in Form eines katalytischen oder thermischen Kraftstoffbrenners, erforderlich, durch den die Abgasreinigungseinheiten gezielt aufgeheizt werden.

Nachteile dieser Konzepte liegen somit im zusätzlichen Kraftstoffverbrauch für eine schnelle Aufheizung sowie im apparativen Aufwand für den Brenner. Außerdem besteht im Hochlastbetrieb die Gefahr, dass die dann verstärkt freigesetzten Schadstoffe in Verbindung mit der hohen Abgastemperatur und der Verstärkungswirkung des Wärmetauschers zu einer starken Überhitzung der Abgasreinigungskomponenten und damit zu ihrer Schädigung oder zur beschleunigten Desaktivierung der Abgaskatalysatoren führen. Zudem reduziert der durch den Wärmetauscher bedingte Abgasdruckverlust besonders im Hochlastbetrieb die Motorleistung.

Zwar wurde in WO 2008/072013 A1 eine sehr allgemeine Schaltung vorgestellt, wie eine Abgasreinigungseinrichtung mittels zweier Schaltventile so mit einem Wärmetauscher verbunden werden kann, dass das Abgas je nach Ventilstellung wahlweise unter Wärmetausch des Zulaufs mit dem Ablauf durch Wärmetauscher und Abgasreinigungseinheit geführt wird, oder, unter Umgehung des Wärmetauschers, nur durch die Abgasreinigungseinheit, oder zusätzlich nur durch die Ein- oder die Ausströmkanäle des Wärmetauschers geführt werden kann. Allerdings bleiben in WO 2008/072013 A1 Wärmetauscher und Abgasbehandlungseinrichtung vollständig getrennt und nur über Rohrleitungen verbunden. Zudem finden sich keinerlei Angaben über eine zweckmäßige apparative Gestaltung. So besteht bei partikelhaltigem Abgas die Gefahr, dass der Wärmetauscher durch Partikelablagerungen allmählich verstopft, wenn er in der gezeigten Weise angeordnet wird.In WO 2008/072013 A1 wird also eine Anordnung vorgeschlagen, die es mittels zweier Ventile erlaubt, das heiße Motorabgas wahlweise entweder direkt auf die Abgasreinigungseinrichtung zu leiten oder es zusätzlich durch einen Wärmetauscher zu führen, sodass die gewünschte Wärmeintegration erfolgt. Allerdings erfordert die beschriebene Anordnung zwei Umschaltventile sowie längere Rohrstrecken zwischen Wärmetauscher und Abgasbehandlungseinheit, wodurch das Volumen, die thermische Masse sowie die Wärmeverluste stark erhöht werden.

Es stellt sich somit die Aufgabe, zweckmäßige apparative Realisierungen von Abgasreinigungssystemen zu entwickeln, bei denen Abgasreinigungskomponenten und Wärmetauscher in einer kompakten Einheit integriert sind. Dabei sollen die Vorteile der bewährten Beeinflussung von Abgastemperatur und -Zusammensetzung mittels Motorsteuerung erhalten bleiben, sodass ein vergleichbar schnelles Kaltstartverhalten wie bei etablierten Konzepten ohne Wärmeintegration erfolgt und im gesamten Betriebsbereich des Motors eine effektive Abgasreinigung ohne Kraftstoffmehrverbrauch, mit geringem Druckverlust und mit akzeptablem apparativen Aufwand erreicht wird. Dies ist das Ziel der nachstehend beschriebenen Erfindung.

Erfindungsgemäß wird diese Aufgabe durch die in Anspruch 1 genannten Merkmale gelöst.

### Erfindungsgemäße Vorteile

Gegenüber dem bisher in Serienfahrzeugen realisierten Stand der Technik besteht der Vorteil der Erfindung darin, dass eine effiziente Temperierung der Abgasreinigungskomponenten auf ein optimales Temperaturniveau erfolgt. Im Fall von zu niedriger Motorabgastemperatur kann dieses Temperaturniveau infolge der effizienten Wärmerückgewinnung mit einem minimalen zusätzlichen Kraftstoffverbrauch aufrechterhalten werden. Der Betrieb der Abgasreinigungskomponenten bei optimaler Betriebstemperatur erlaubt es, den Edelmetallgehalt der Abgaskatalysatoren deutlich zu reduzieren, sodass die Zusatzkosten des Wärmetauschers durch die Einsparungen an Edelmetallen mehr als aufgewogen werden können.

Im Fall der Dieselabgasreinigung kann der Rußabbrand ausschließlich oder weitgehend durch das am Dieseloxidationskatalysator erzeugte NO₂ erfolgen (sog. CRT-Regeneration), sodass eine thermische Dieselfilterregeneration mit allen damit verbundenen Problemen und Nachteilen vermieden oder in ihrer Häufigkeit stark reduziert werden kann.

Gegenüber den eingangs genannten bisher bekannten wärmeintegrierten Konzepten besteht ein Vorteil der Erfindung darin, dass mit einer einfachen Abgasklappe 1 zwischen einem Kaltstart- bzw. Hochlastbetrieb und einem Normalbetrieb mit Wärmerückgewinnung umgeschaltet werden kann. Eine mögliche Leckage der Abgasklappe hat dabei keinen Einfluss auf die Reinigungsleistung der Abgasbehandlung sondern lediglich auf die Güte der Wärmerückgewinnung.

Bei Kaltstart erfolgt eine schnelle Aufheizung der Katalysatorkomponenten gemäß dem etablierten Stand der Technik dadurch, dass während der Kaltstartphase mittels Motorsteuerung ein heißes und CO/H₂-reiches Abgas erzeugt und dieses Abgas durch Öffnen der Abgasklappe direkt auf die Abgasreinigungskomponenten geleitet wird. Dabei wird die thermische Aufheizung durch die am Katalysator freigesetzte Verbrennungswärme unterstützt. Durch die vorübergehende Umleitung des Abgases direkt auf die Abgasreinigungskomponenten wird die thermische Trägheit des Wärmetauschers umgangen. Damit entfällt gleichzeitig die Notwendigkeit der bisher bekannten wärmeintegrierten Konzepte, über einen (katalytischen) Kraftstoffbrenner eine schnelle Aufheizung der Abgasreinigungskomponenten zu gewährleisten.

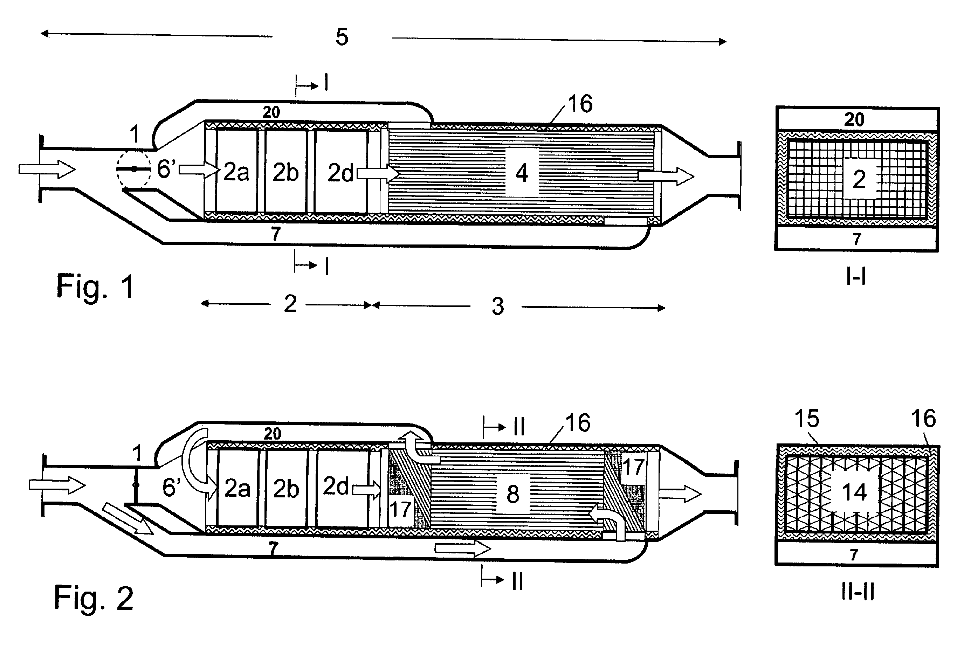

Gleichzeitig erlaubt es die Abgasklappe, die Einströmkanäle des Wärmetauschers zu umgehen, sobald das Abgas bei entsprechender Last das erforderliche optimale Temperaturniveau erreicht hat. Damit wird verhindert, dass die Temperatur der Abgasreinigungskomponenten infolge der Wärmerückgewinnung auf unzulässig hohe Temperaturen ansteigt. Gleichzeitig wird der Druckverlust der mehrfachen Strömungsumlenkungen eliminiert, der sich bei hohen Abgasströmen andernfalls leistungsmindernd auswirken würde. Trotzdem strömt das Abgas in den Ausgestaltungen von Fig. 1 bis 5 nach wie vor durch die strömungsgünstig gestalteten Ausströmkanäle des Wärmetauschers, sodass durch Schließen der Klappe 1 ein problemloses Umschalten auf den Betrieb mit Wärmetauscher möglich ist, sobald die Abgastemperatur wieder absinkt.

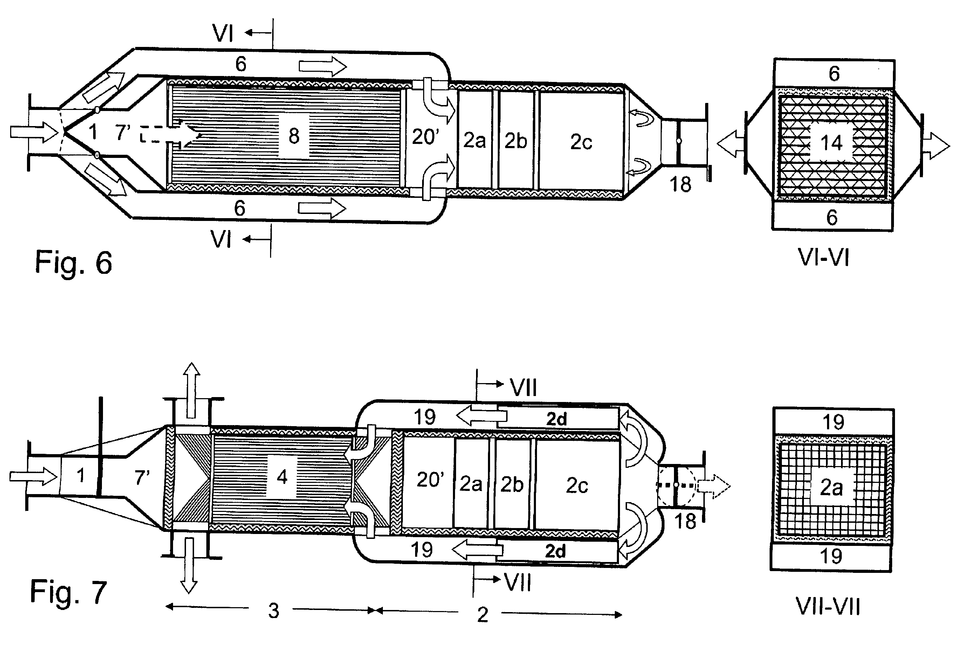

Im Fall von partikelbeladenem Abgas, speziell Dieselabgas, erlaubt es die Strömungsführung der Ausgestaltung gemäß Fig. 6 und 7, auch im Betrieb mit Wärmetausch das partikelbeladene Abgas auf sehr direktem Weg den Abgasreinigungskomponenten zuzuführen und die Gefahr der Ablagerung von Dieselruß in Umlenkungen oder im Wärmetauscher zu minimieren. Durch eine weitere Abgasklappe 18 kann bei Kaltstart und im Fall von Hochlast mit entsprechend hoher Motorabgastemperatur ein Großteil des Abgases direkt nach Durchströmung der Abgasreinigungskomponenten entlassen werden, sodass der Druckverlust minimiert wird. Insbesondere ermöglicht die Abgasklappe 18 auch eine thermische Filterregeneration, ohne dass die dabei auftretenden Temperaturen eine nachgeschaltete DeNox-Einheit schädigen können.

Schließlich erlaubt es die erfindungsgemäße apparative Gestaltung der Abgasbehandlungseinheit, Abgasreinigungskomponenten in ihrer bisherigen technisch verfügbaren und erprobten Form einzusetzen und mit einem effizienten und strömungsgünstigen Wärmetauscher-Kanalpaket zu einer kompakten gemeinsamen Einheit zu verbinden. Das vermeidet insbesondere zusätzliche Entwicklungsarbeiten mit dem Ziel, Abgasreinigungskomponenten in die Kanäle des Wärmetauschers zu integrieren.

In einer vorteilhaften Weiterbildung der Erfindung kann vorgesehen sein, dass im Bereich des Eintritts des Abgases eine elektrisch beheizbare inerte oder katalytisch beschichtete Komponente angeordnet ist, mit der während der Kaltstartphase solange Wärme in das Abgas eintragbar ist, bis die für die Verbrennung von Abgasschadstoffen notwendige Anspringtemperatur in der wenigstens einen nachfolgenden Abgasreinigungskomponente überschritten ist.

Des Weiteren kann vorgesehen sein, dass als Abgasreinigungskomponenten mindestens ein Dieseloxidationskatalysator und ein Dieselpartikelfilter vorhanden sind, wobei der Gegenstromwärmetauscher in Strömungsrichtung so vor den Abgasreinigungskomponenten angeordnet ist, dass seine Einströmkanäle ohne Strömungsumlenkung und mit strömungsgünstigem Ein- und/oder Auslauf durchströmt werden können, und dass die Umschalteinrichtung das Abgas über einen Strömungsweg direkt zu den Abgasreinigungskomponenten führt, um die Einströmkanäle des Gegenstromwärmetauschers zu umgehen. Diese Lösung ist insbesondere für Dieselmotoren vorteilhaft.

Um eine Entstickung der Abgase zu erreichen, kann des Weiteren vorgesehen sein, dass als weitere Abgasreinigungskomponenten eine oder mehrere Entstickungskomponenten vorgesehen sind.

In diesem Zusammenhang kann eine vorteilhafte Weiterbildung der Erfindung darin bestehen, dass eine Entstickungskomponente in einem dem Dieseloxidationskatalysator und dem Dieselpartikelfilter nachgeschalteten Strömungskanal angeordnet ist.

Wenn hinter dem Dieselpartikelfilter eine weitere Umschalteinrichtung vorgesehen ist, die derart geöffnet werden kann, dass das Abgas nicht mehr durch den Strömungsweg sowie die Ausströmkanäle des Wärmetauschers strömen muss, sondern die Abgasbehandlungseinheit direkt verlässt, so kann auf diese Weise während der thermischen Filterregeneration oder im Hochlastfall eine Überhitzung von nachgeschalteten Komponenten verhindert werden.

Eine hinsichtlich der konstruktiven Ausgestaltung sehr vorteilhafte Ausführungsform der Erfindung kann darin bestehen, dass der Gegenstromwärmetauscher aus einem Kanalpaket mit rechteckigem Querschnitt gebildet ist, in dem Einströmkanäle und Ausströmkanäle jeweils abwechselnd neben- bzw. übereinander angeordnet sind und der Zu- bzw. Abstrom für jede Kanalrichtung entweder axial über die Stirnfläche oder über seitliche Ein- bzw. Auslässe erfolgt, und wobei die Strömungsführung sowie der Wärmeübergang durch Profilierung der Wandungen der Einströmkanäle und Ausströmkanäle oder durch eingelegte profilierte Spacerstrukturen verbessert wird, und wobei das Kanalpaket umfangsseitig von einer gemeinsamen Isolations- und Abdichtungsschicht sowie einem gemeinsamen Mantel umschlossen ist, sodass nur Ein-Austrittsöffnungen für die Strömungskanäle offen bleiben und wobei die Wände benachbarter Strömungskanäle des Kanalpakets an Zu- und/oder Austrittsöffnungen jeweils paarweise so zusammengeführt sind, sodass sich spitze, strömungsgünstige Ein- und/oder Ausläufe ergeben.

Eine kompakte Form und eine sichere Funktionsweise der erfindungsgemäßen Vorrichtung ergibt sich, wenn die wenigstens eine Abgasreinigungskomponente und das Kanalpaket des Gegenstromwärmetauschers hintereinander angeordnet sind und von Isolations- und Dichtmaterial sowie von einem gemeinsamen Mantel umschlossen sind und ein oder mehrere Strömungskanäle vom Eingang der Abgasreinigungseinheit zum Zulauf der Einströmkanäle des Gegenstromwärmetauschers verlaufen, und ein oder mehrere Strömungskanäle vom Ausgang der Einströmkanäle des Gegenstromwärmetauschers zum Beginn der Abgasreinigungskomponenten verlaufen, sodass bei geschlossener Abgasumschalteinrichtung das Abgas über den Strömungskanal zu den Eintrittskanälen des Wärmetauschers geführt wird, in diesen von dem Abgas in den Austrittskanälen aufgeheizt wird, über den Strömungskanal den Abgasreinigungskomponenten zugeführt wird und diese über die Ausströmkanäle des Wärmetauschers verlässt. Dabei umfasst die Angabe, wonach die wenigstens eine Abgasreinigungskomponente und das Kanalpaket des Gegenstromwärmetauschers hintereinander angeordnet sind, sowohl eine Anordnung, in welcher der Wärmetauscher in Strömungsrichtung vor oder hinter den Abgasreinigungskomponenten angeordnet ist. Eine besonders kompakte Bauform ergibt sich, wenn zumindest ein Teil der Strömungskanäle so in den Mantel integriert sind, dass sie zwischen den jeweiligen Ein-/Austrittsöffnungen an dem Mantel entlang verlaufen.

Des Weiteren kann es von Vorteil sein, dass die Einströmkanäle oder die Ausströmkanäle des Gegenstromwärmetauschers gerade und ohne Umlenkungen durch den Wärmetauscher geführt werden. Dadurch werden in diesen Kanälen Druckverlust und mögliche Partikelablagerungen minimiert. Eine verfahrensgemäße Lösung der Aufgabe ergibt sich aus den Merkmalen des Anspruchs 11.

Mit diesem Verfahren lässt sich die erfindungsgemäße Vorrichtung besonders vorteilhaft zur Abgasreinigung einsetzen.

Wenn dabei vorgesehen ist, dass der direkte Strömungsweg zu der wenigstens einen Abgasreinigungskomponente durch die Steuereinheit und die Umschalteinrichtung nach der Aufheizung der wenigstens einen Abgasreinigungskomponente auf Betriebstemperatur wieder geöffnet wird, sobald die Temperatur des aus der Verbrennungskraftmaschine austretenden Abgases einen Schwellenwert überschreitet, der keine Wärmerückgewinnung durch den Gegenstromwärmetauscher erfordert, so werden eventuelle Strömungsverluste verhindert und eine Überhitzung der gesamten Vorrichtung vermieden.

Um insbesondere Abgase von Dieselmotoren zu reinigen, kann vorgesehen sein, dass als Abgasreinigungskomponenten ein Dieseloxidationskatalysator und ein Dieselpartikelfilter hintereinandergeschaltet oder ineinander integriert sind, wobei die Motorsteuerung durch Spät- oder Nacheinspritzung dafür sorgt, dass die Abgasreinigungskomponenten in einem Temperaturbereich zwischen ca. 300 und 450°C betrieben werden, sodass die Regeneration des Dieselpartikelfilters zumindest überwiegend kontinuierlich mittels des an dem Dieseloxidationskatalysator gebildeten NO₂ erfolgt.

Wenn außerdem vorgesehen ist, dass eine hinter dem Dieselpartikelfilter angeordnete Umschalteinrichtung im Hochlastbereich der Verbrennungskraftmaschine so weit geöffnet ist, dass die Ausströmkanäle des Gegenstromwärmetauschers nur schwach durchströmt werden, und während der thermischen Regeneration des Dieselpartikelfilters sobald und so lange vollständig geöffnet wird, wie das aus dem Dieselpartikelfilter austretende Abgas Temperaturwerte aufweist, die zu einer Schädigung der wenigstens einen in dem Strömungskanal angeordneten Reinigungskomponente oder der Ausströmkanäle des Wärmetauschers führen können, so wird der Druckverlust in den entsprechenden Betriebsbereichen minimiert und Beschädigungen der erfindungsgemäßen Vorrichtung werden vermieden.

### Einordnung und Erläuterung des Erfindungskonzepts

Die eingangs aufgeführten Nachteile des Standes der Technik werden durch die in den Ansprüchen genannten Merkmale wie folgt vermieden: Gemäß Figur 1 bis 7 wird das Motorabgas bei Kaltstart wie bei herkömmlichen Konzepten direkt auf die hintereinander angeordneten Abgasreinigungskomponenten 2, wie zum Beispiel Katalysatoren, Partikelfilter oder dergleichen geleitet. Dabei wird mittels der Motorsteuerung ein schnelles Erreichen des für die Abgasreinigung notwendigen Temperaturbereichs bewirkt. Das aus der in Strömungsrichtung letzten Abgasreinigungskomponente 2c/d austretende Abgas wird anschließend in druckverlustarm gestaltete Ausströmkanäle 4 eines Gegenstromwärmetauschers 3 geleitet und verlässt danach die Abgasbehandlungseinheit 5.

Sobald die Abgasreinigungskomponenten 2 den für die Schadstoffumsetzung erforderlichen Temperaturbereich erreicht haben und auch der Ausströmkanal 4 des Wärmetauschers auf etwa der halben Länge aufgeheizt ist, wird von einer Steuerungseinheit (nicht gezeigt) der direkte Strömungsweg 6 des Abgases zu den Abgasreinigungskomponenten 2 durch eine Umschalteinrichtung 1 geschlossen und das Abgas gemäß Fig. 2, 4 und 6 über einen als Umgang bezeichneten Strömungsweg 7 zu den Einströmkanälen 8 des Gegenstromwärmetauschers 3 geleitet. Dort wird es von den bereits vorgeheizten Wänden der Ausströmkanäle 4 aufgeheizt und gelangt über einen weiteren, ebenfalls als Umgang bezeichneten Strömungsweg 20 in den direkten Strömungsweg 6 hinter der Umschalteinrichtung 1. Von hier strömt es wie zu Anfang über die Abgasreinigungskomponenten 2 und durch die Ausströmkanäle 4 des Gegenstromwärmetauschers 3 aus der Abgasreinigungseinheit 5 aus. Dabei überträgt es seine Wärme an das einströmende Abgas. Infolge des Wärmerückgewinns kann im Folgenden die Motor-Abgastemperatur und der Schadstoffgehalt des Abgases durch die Motorsteuerung so weit reduziert werden, dass die Wärmefreisetzung in den Abgasreinigungskomponenten 2 gerade die Wärmeverluste der Abgasreinigungseinheit 5 kompensiert.

Falls die Motorabgastemperatur nach abgeschlossenem Kaltstart aufgrund erhöhter Motorlast den für einen Betrieb der Abgasreinigungskomponenten geeigneten Betriebsbereich erreicht oder überschreitet, ist eine Wärmerückgewinnung mittels des Gegenstromwärmetauschers nicht mehr erforderlich. Dann kann die Umschalteinrichtung 1 wieder geöffnet werden und das Abgas strömt auf direktem Weg 6 und mit minimalem Druckverlust durch die Abgasreinigungskomponenten 2 und die Ausströmkanäle 4 des Wärmetauschers 3 ab. Dabei bleibt der Wärmetauscher auf ausreichend hoher Temperatur, sodass er bei erneutem Absinken der Motorabgastemperatur und Schließen der Abgasumschalteinrichtung 1 seine Wärmerückgewinnungsfunktion wieder unmittelbar aufnehmen kann.

Die vorstehend skizzierte Grundform der Erfindung und einige zweckmäßige Ausgestaltungen werden im Folgenden anhand der Zeichnungen dargestellt und erläutert. Es zeigen:
- Fig. 1 und 2: eine erste erfindungsgemäßen Ausgestaltung der Abgasbehandlungseinheit 5 und der Abgasströmungsführung.

In Fig. 1 ist der Strömungsweg dargestellt im Falle des Kaltstarts oder falls die Motorabgastemperatur die erforderliche Betriebstemperatur der Abgaskomponenten erreicht oder überschreitet. In Fig. 2 ist der Abgasströmungsweg mit Wärmerückgewinnung durch den Wärmetauscher 3 dargestellt.

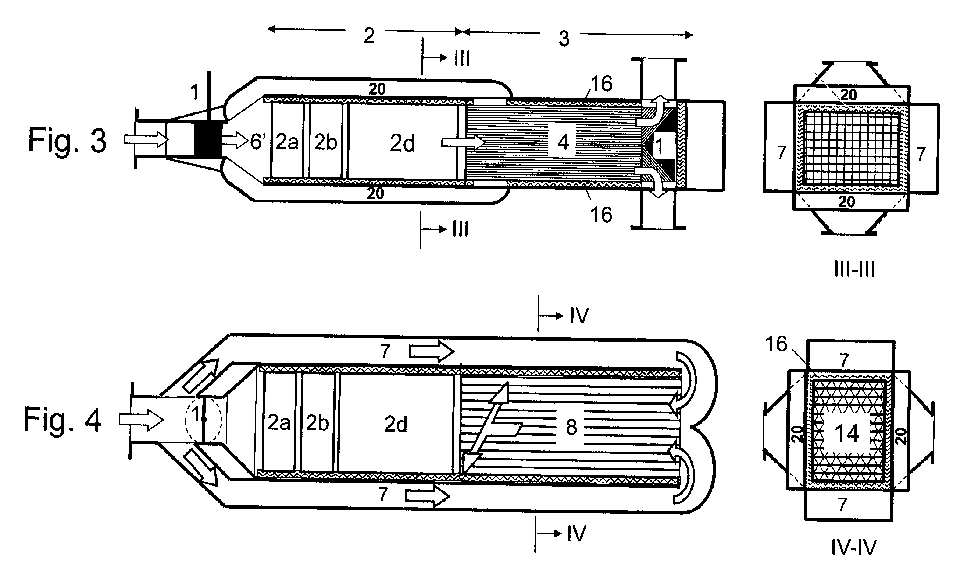

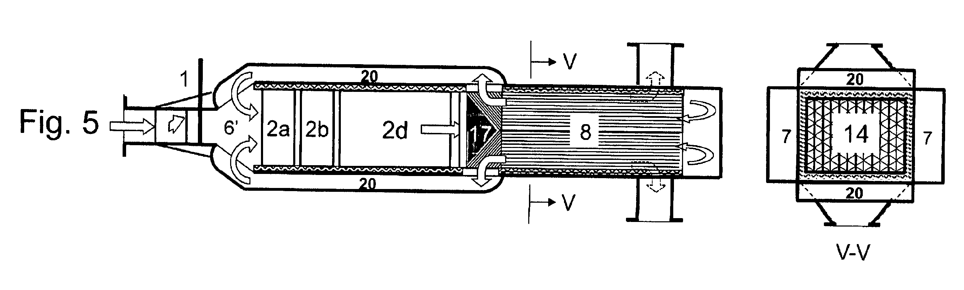

- Fig. 3, 4 und 5: zeigen eine zweite, besonders für große Verbrennungsmotoren ohne Partikelfilter geeignete Ausführungsform der Erfindung mit paarweise angeordneten Umgängen in Draufsicht, Seitenansicht und Querschnitt. Fig. 3 zeigt die Strömungsführung unter Umgehung des Wärmetauschers, in Fig. 4 und 5 wird der Wärmetauscher bestimmungsgemäß durchströmt.
- Fig. 6 und 7: zeigen eine dritte, besonders für Verbrennungskraftmaschinen mit Partikelfilter geeignete Ausführungsform, ebenfalls mit paarweise angeordneten Umgängen in Seitenansicht, Draufsicht und Querschnitt.

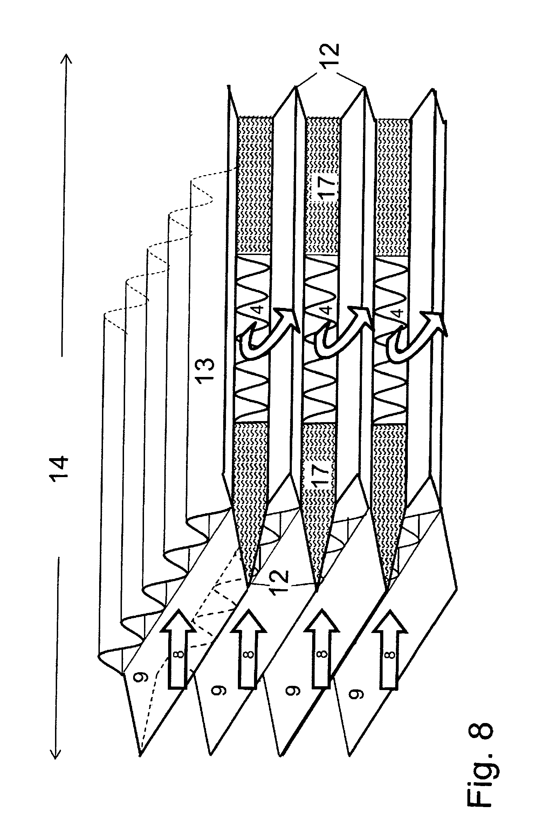

- Fig. 8: zeigt einen Ausschnitt aus dem Kanalpaket 14 des Gegenstromwärmetauschers 3 in einer bevorzugten Ausführung bestehend aus einer Abfolge von glatten Trennwänden 9 und Wellenspacern 13, bei denen die glatten Wände 9 an den Ein- und Auslässen jeweils paarweise so zusammengefasst sind, dass sich spitze, strömungsgünstige Ein-/Auslässe 12 ergeben.

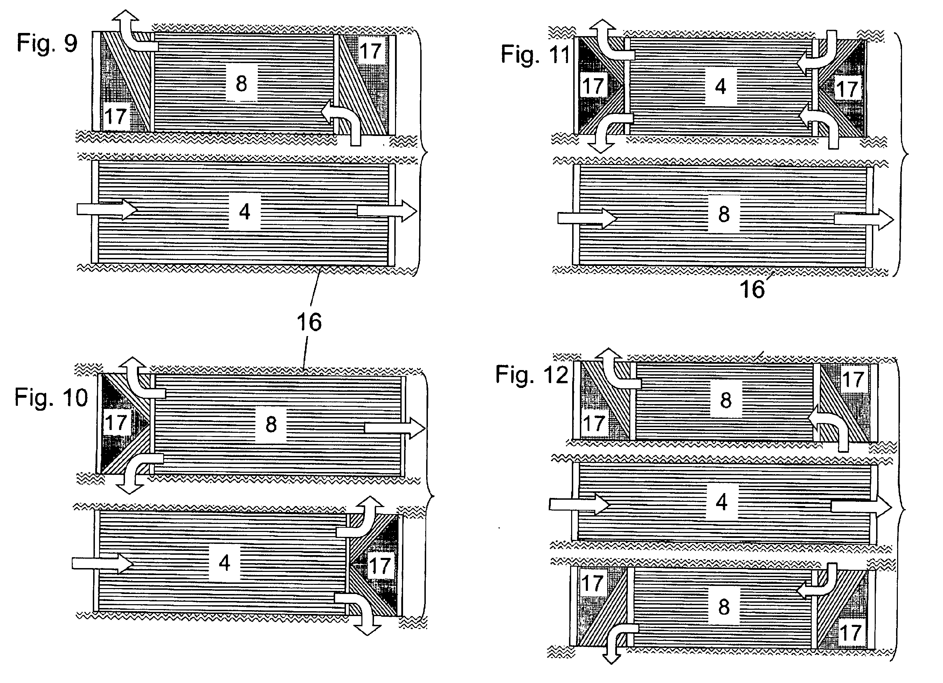

- Fig. 9 bis 12: zeigen die Strömungsführung in aufeinanderfolgenden Aus- und Einströmkanälen 4, 8, die durch die entsprechende Anordnung von Wellenspacern 13 und Dichtungsmaterial 17 zwischen den glatten Trennwänden 9 bewirkt wird. Fig. 9 zeigt die Strömungsführung der Anordnung von Fig. 1 und 2, Fig. 10 zeigt die Strömungsführung der Anordnung nach Fig. 3 bis 5 und Fig. 11 und 12 zeigen zwei alternative Strömungsführungen für die Anordnung nach Fig. 6 und 7.

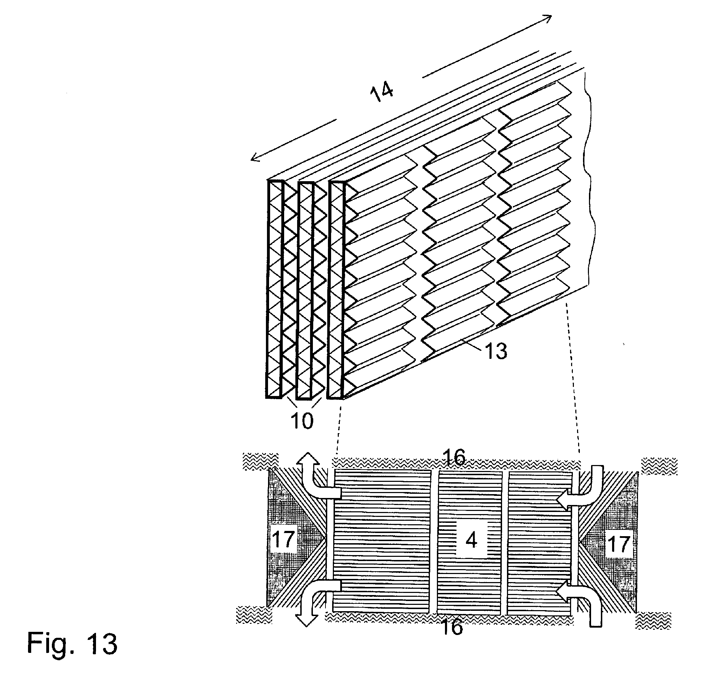

- Fig. 13: zeigt einen Ausschnitt aus einem Kanalpaket 14, mit der erfindungsgemäßen Anordnungen von Wellenspacern 13 in den Strömungskanälen 4,8 des Wärmetauschers 3 so, dass nach jedem Wellenspacer eine Querverteilung der Strömung über dem Kanalquerschnitt erfolgen kann.

### Ausgestaltung des erfindungsgemäßen Verfahrens für Motoren ohne Partikelfilter

Das Grundkonzept der Erfindung gemäß Fig. 1 wurde bereits vorstehend kurz erläutert. Es soll im Folgenden näher beschrieben werden. Dazu zeigen Fig. 1 und 2 eine erste erfindungsgemäße Ausführungsform in Längs- und Querschnitten. Das aus einem nicht dargestellten Verbrennungsmotor oder einem demselben nachgeschalteten Abgasturbolader austretende Abgas tritt über den linken Stutzen in die Abgasreinigungseinheit 5 ein. Die Strömungsführung bei Kaltstart oder bei Hochlast ist in Fig. 1 durch Pfeile dargestellt. Dabei ist die Umschalteinrichtung bzw. Abgasumschalteinrichtung 1 in Form einer Klappe geöffnet, sodass das Abgas auf dem direkten Strömungsweg 6 den hintereinander angeordneten Abgasreinigungskomponenten 2a bis 2d zugeführt wird. Nach der letzten Abgasreinigungskomponente 2d verlässt es die Abgasbehandlungseinheit auf geradem Weg durch die Ausströmkanäle 4 des Gegenstromwärmetauschers 3 über den rechten Austrittsstutzen.

Durch entsprechende Motorsteuerung mit später Zündung oder mehrfacher Kraftstoffeinspritzung wird während des Kaltstarts ein heißes, CO- und wasserstoffreiches Abgas erzeugt, sodass die Verbrennung von Wasserstoff und CO auf dem Oxidationskatalysator 2a, 2b schnell einsetzt und das Abgas in der Folge die nachgeschalteten Abgasreinigungskomponenten 2 sowie die Ausströmkanäle 4 des Wärmetauschers zügig aufheizt. Nach erfolgter Aufheizung der Abgasreinigungskomponenten 2 und der Abströmkanäle 4 wird die Klappe 1 geschlossen, sodass das Abgas, wie in Fig. 2 gezeigt, über den als Umgangskanal bezeichneten Strömungsweg 7 den Einströmkanälen 8 des Gegenstromwärmetauschers 3 zugeführt wird. Hier wird es durch die bereits vorgeheizten Kanalwände auf die Betriebstemperatur der Abgasbehandlungskomponenten 2 aufgeheizt und über den als Umgang bezeichneten Strömungsweg 20 zum Zulauf 6 der Abgasbehandlungskomponenten geführt.

Zur Aufheizung der Abgasreinigungskomponenten 2 auf ihre erforderliche Betriebstemperatur muss die Motorsteuerung des Verbrennungsmotors zunächst ein entsprechend heißes Abgas produzieren. Zusätzlich kann die Aufheizung durch eine erste Abgasbehandlungseinheit in Form eines elektrisch beheizbaren Oxidationskatalysators 2a beschleunigt werden. Dabei ist es vorteilhaft, wenn die Motorsteuerung während der Kaltstartphase ein CO- und wasserstoffreiches Abgas erzeugt, sodass die Aufheizung durch die am Katalysator freigesetzte Verbrennungswärme unterstützt wird.

Sobald die Abgasreinigungskomponenten 2 und die Ausströmkanäle 8 des Wärmetauschers 2 ausreichend aufgeheizt sind, kann die im vorliegenden Fall als Klappe ausgebildete Umschalteinrichtung 1 langsam oder schlagartig geschlossen werden, wie dies in Fig. 2 dargestellt ist. Eine Anhebung der Abgastemperatur über die Motorsteuerung ist jetzt nicht mehr erforderlich. Vielmehr wird jetzt das eintretende Motorabgas durch das aus den Abgasreinigungskomponenten 2 austretende Abgas im Gegenstromwärmetauscher 3 ausreichend vorgewärmt. Dabei muss die Motorsteuerung lediglich gewährleisten, dass die erforderliche Betriebstemperatur der Abgasreinigungskomponenten 2 bei Schwachlast oder im Leerlauf nicht unterschritten wird. Das kann in bekannter Weise durch eine Verstellung des Zündzeitpunktes oder der Kraftstoffeinspritzung erfolgen, wodurch die Abgaskonzentration an unverbrannten Abgaskomponenten geringfügig erhöht wird. Diese Komponenten werden an den ersten Abgasreinigungskomonenten 2a, 2b katalytisch verbrannt, wodurch die erforderliche Wärme am heißen Ende des Wärmetauschers bereitgestellt wird. Im Vergleich zu einer herkömmlichen Abgasreinigungseinheit ohne Wärmerückgewinn im Gegenstromwärmetauscher ist dafür je nach Wirkungsgrad des Wärmetauschers nur ein kleiner Bruchteil der sonst erforderlichen Kraftstoffmenge erforderlich.

Falls die Motorabgastemperatur während des Fahrzeugbetriebs auf oder über die erforderliche Betriebstemperatur der Abgasreinigungskomponenten 2 ansteigt, wird die Klappe 1 wieder geöffnet. Dann strömt das ausreichend heiße Abgas wieder gemäß Fig. 1 direkt auf die Abgasreinigungskomponenten 2 und verlässt die Abgasbehandlungseinheit anschließend über die Ausströmkanäle 4 des Wärmetauschers. Durch dieses Vorgehen wird zum einen verhindert, dass sich in den Abgasreinigungskomponenten 2 durch die Verstärkungswirkung des Wärmetauschers 3 unzulässig hohe Temperaturen einstellen. Zum zweiten entfällt der Abgasdruckverlust der Einströmkanäle 8 und der mehrfachen Umlenkungen in den Umgängen 7, 20. Das ist insbesondere bei Hochlastbetrieb mit hohem Abgasmassenstrom von Vorteil. Und zum dritten werden die Abströmkanäle 4 des Wärmetauschers 3 nach wie vor von heißem Abgas durchströmt, sodass der Betrieb mit Wärmerückgewinn gemäß Fig. 2 direkt wieder aufgenommen werden kann, wenn die Motorabgastemperatur unter die erforderliche Betriebstemperatur sinkt.

Die Figuren 3 bis 5 zeigen eine weitere erfindungsgemäße Ausführungsform in Draufsicht (Fig. 4), in zwei Seitenansichten (Fig. 3 und 5) und in den jeweiligen Querschnitten. Diese Ausführungsform unterscheidet sich von der Ausführungsform gemäß Figur 1 und 2 im Wesentlichen darin, dass die Umgänge 7 und 20 jeweils paarweise und symmetrisch zueinander an den vier Seitenflächen der Abgasreinigungseinheit 5 angeordnet sind. Damit eignet sich diese Ausführungsform insbesondere für die Abgasreinigung von größeren Motoren mit hohem Abgasvolumenstrom. Im Unterschied zu Fig. 2 erfolgt der Zulauf zu den Einströmkanälen 8 und zu den Abströmkanälen 4 des Wärmetauschers 3 jeweils axial und der Ablauf jeweils seitlich.

Beiden Ausführungsformen der Figuren 1 und 2 bzw. der Figuren 3 bis 5 ist gemeinsam, dass die Umschalteinrichtung 1, die wenigstens eine Abgasreinigungskomponente 2, der Gegenstromwärmetauscher 3 und die Strömungswege 6, 7, 19, 20 in einer kompakten Abgasbehandlungseinheit 5 integriert sind.

### Ausgestaltung des erfindungsgemäßen Verfahrens für Motoren mit Partikelfilter

Die Figuren 6 und 7 zeigt eine weitere erfindungsgemäße Ausführungsform in Seitenansicht (Fig. 6) und in Draufsicht (Fig. 7) zusammen mit zwei Querschnitten. In der dargestellten Anordnung ist diese Ausführungsform besonders für Abgasreinigungssysteme mit Partikelfilter geeignet. Dabei ist es zu bevorzugen, wenn der partikelhaltige Abgasstrom die Einströmkanäle 8 des Wärmetauschers 3 axial und ohne Umlenkung durchströmt, um eine Abscheidung und Akkumulation von Partikeln im Wärmetauscher weitestgehend zu vermeiden.

Bei Kaltstart und bei Hochlast wird der Abgasstrom bei geschlossener Umschalteinrichtung 1 auf dem Strömungsweg 6 direkt auf die Abgasreinigungskomponenten 2 geleitet (Fig. 6). Diese umfassen in dem Fall der Dieselabgasreinigung eine Reihenschaltung von Dieseloxidationskatalysator DOC 2b, Dieselpartikelfilter 2c und DeNOx-Katalysator 2d, wobei der Dieseloxidationskatalysator 2b und/oder der DeNOx-Katalysator auch auf dem Partikelfilter 2c aufgebracht sein können. Wie in den vorher diskutierten Ausführungsformen kann auch ein elektrisch beheizbarer Oxidationskatalysator 2a vor dem Dieseloxidationskatalysator 2b angeordnet sein. Über die Motorsteuerung und ggf. unterstützt durch eine Kraftstoffnacheinspritzung wird die Abgastemperatur bei Kaltstart so lange angehoben, bis die Abgasreinigungskomponenten 2 ihre Betriebstemperatur erreicht haben. Nach Verlassen der Reinigungskomponenten 2 strömt das gereinigte Abgas über den Umgang 19 wie in den zuvor diskutierten Ausführungsformen durch die Abströmkanäle 4 des Wärmetauschers 3, heizt diese auf und verlässt die Abgasreinigungseinheit 5 in diesem Fall über die seitlichen Ausströmkanäle.

Erst nach ausreichender Aufheizung der Abströmkanäle 4 wird die in diesem Fall als Doppelklappe ausgeführte Umschalteinrichtung 1 geöffnet und damit gleichzeitig der direkte Strömungsweg 6 geschlossen, sodass das Motorabgas jetzt axial und ohne Umlenkung durch die Einströmkanäle 8 des Wärmetauschers 3 und von diesen direkt auf die Abgasreinigungskomponenten 2 strömt und die Abgasreinigungseinheit 5 über die Umgänge 19 und die Ausströmkanäle 4 des Wärmetauschers 3 seitlich verlässt.

Wie in Fig. 6 und 7 skizziert kann alternativ auch eine weitere Abgasklappe 18 wie nachstehend beschrieben bei Kaltstart, bei Hochlast und insbesondere bei der thermischen Filterregeneration zum Einsatz kommen. Dann verlässt das Abgas die Abgasbehandlungseinheit ganz oder teilweise über die Klappe 18.

Als geeignetes Betriebstemperaturfenster der Abgasreinigungseinheiten 2 für die Dieselabgasreinigung bietet sich ein Temperaturbereich zwischen 300 und 400 °C an. Da die an den Abgasreinigungskomponenten 2 freigesetzte Reaktionswärme durch einen entsprechend effizienten Gegenstromwärmetauscher 3 zum größten Teil zurück gewonnen wird, kann dieses Temperaturniveau auch bei kühlerem Motorabgas ohne oder mit minimalem Kraftstoffmehrverbrauch aufrecht erhalten werden. Dabei werden CO und unverbrannte Kohlenwasserstoffe am Oxidationskatalysator 2a oxidiert und NO zu NO₂ umgewandelt. Dann wird der am nachfolgenden Partikelfilter abgeschiedene Ruß durch NO₂ kontinuierlich abgebrannt (sog. CRT-Effekt). Allerdings entsteht dabei wiederum NO, welches im vorliegenden Fall an dem nachfolgenden DeNOx-Katalysator 2d oxidiert und zu molekularem Stickstoff umgewandelt wird. Dabei kommen als DeNOx-Verfahren sowohl ein sog. NOx-Speicherkatalysator (NSK) mit periodischem Mager-/Fettwechsel oder ein SCR-Katalysator oder eine Kombination von NSK und SCR in Frage.

Da die Rußfilterregeneration nach dem CRT-Effekt kontinuierlich erfolgt, ist kein periodischer thermischer Filterabbrand erforderlich. Das eliminiert den für die Einleitung der thermischen Regeneration erforderlichen erhöhten Kraftstoffverbrauch und vermeidet die Gefahr hoher Filterabbrandtemperaturen und die dadurch hervorgerufene Schädigung der nach dem Partikel- bzw. Rußfilter angeordneten Abgasreinigungskomponenten. Daher kann in diesem Fall auch ein NOx-Speicherkatalysator 2d direkt hinter dem Partikelfilter 2c und nicht wie in Fig. 4 in den Umgangskanälen 19 angeordnet werden. Dann kann während des Kaltstarts sowie bei Hochlast mit entsprechend hoher Motorabgastemperatur die Abgasklappe 18 so weit geöffnet werden, dass nur ein Teilstrom des gereinigten Abgases über den Umgang 19 strömt und der Hauptstrom die Abgasreinigungseinheit 5 über den Ausgang bei 18 verlässt. Dadurch wird der Druckverlust minimiert; gleichzeitig werden die Ausströmkanäle 4 des Wärmetauschers 3 ausreichend vorgeheizt, sodass im Anschluss durch Schließen der Abgasklappe 18 auf Wärmetauscherbetrieb umgeschaltet werden kann.

Falls auf eine gelegentliche thermische Regeneration nicht verzichtet werden kann oder soll, so kann diese in herkömmlicher Weise erfolgen, indem durch Spät- oder Nacheinspritzung von Kraftstoff ein schadstoffreiches Abgas erzeugt wird, welches am Dieseloxidationskatalysator 2b verbrennt und damit die für eine thermische Filterregeneration erforderlichen Abgastemperaturen vor dem Partikelfilter 2c von ∼ 600°C erzeugt. In diesem Fall sollte die Abgasklappe 18 während des Filter-Abbrands geöffnet werden, um einen unzulässigen Temperaturanstieg infolge der Verstärkungswirkung des Gegenstromwärmetauschers 3 zu vermeiden. Außerdem ist es in diesem Fall von Vorteil, die DeNOx-Reinigungskomponenten 2d in den Umgangskanälen 19 anzuordnen, um eine thermische Schädigung durch zu hohe Abbrandtemperaturen zu vermeiden. Da in diesem Fall bei geöffneter Abgasklappe 18 die Entstickung entfällt, ist der Motor in einem Betriebsfenster mit geringer NOx-Entwicklung zu betreiben, solange die Abgasklappe 18 geöffnet ist.

### Elektrisch beheizter Oxidationskatalysator

Erfindungsgemäß erfolgt das Aufheizen der Katalysatorkomponenten beim Kaltstart durch die Bereitstellung eines entsprechend heißen und schadstoffreichen Abgases mittels der Motorsteuerung des Verbrennungsmotors. Der Kaltstartvorgang kann aber insbesondere bei Erdgasmotoren mit einer hohen erforderlichen Betriebstemperatur dadurch verkürzt werden, dass dem Oxidationskatalysator ein elektrisch beheizter Oxidationskatalysator (E-Kat) vorgeschaltet wird. Dabei wird der E-Kat zweckmäßigerweise als erste Einheit 2a der Abgasreinigungskomponenten 2 angeordnet. Der E-Kat 2a wird dabei nur so lange elektrisch beheizt, bis die Anspringtemperatur der Schadstoffkomponenten auf ihm und dem nachfolgenden Oxidationskatalysator überschritten ist.

### Apparative Gestaltung

Im Rahmen der vorstehend erläuterten und in den Ansprüchen niedergelegten Erfindung besteht eine große Vielfalt in der konkreten apparativen Gestaltung und Strömungsführung. Dabei kommt es insbesondere auf eine möglichst kompakte Form, auf die weitgehende Nutzung etablierter Abgasreinigungskomponenten und auf die Minimierung von Druckverlust und Wärmeverlusten an. Im Folgenden werden dazu zweckmäßige erfindungsgemäße Ausgestaltungen erläutert.

Der erfindungsgemäße Gegenstromwärmetauscher 3 weist vorzugsweise ein Kanalpaket 14 mit rechteckigem Querschnitt auf, wie in den Querschnitten von Fig. 2 und 4 bis 6 gezeigt. Dabei sind die Einströmkanäle 8 und die Ausströmkanäle 4 abwechselnd neben- bzw. übereinander angeordnet und der Zu- bzw. Abstrom für jede Kanalrichtung 4, 8 erfolgt entweder axial über die Stirnfläche oder über seitliche Ein- bzw. Auslässe. Dabei kann der Wärmeübergang in den einzelnen Kanalreihen durch Profilierung der Kanalwände oder durch eingelegte profilierte Spacerstrukturen 13 verbessert werden.

Figur 8 zeigt einen Ausschnitt aus einem erfindungsgemäßen Kanalpaket 14, bei dem das Paket aus einer Aufeinanderfolge von glatten Kanalwänden 9 und gewellten Spacerstrukturen 13 gebildet ist. Dabei dienen die gewellten Spacerstrukturen 13 zum einen der Abstandshaltung zwischen den glatten Kanalwänden, zum Zweiten der Strömungsführung und zum Dritten verbessern sie durch ihre Rippenwirkung den Wärmeübergang. Wie in Fig. 8 gezeigt, bietet es sich bei allen Strömungsführungen an, den axialen Ein- bzw. Auslauf, durch Zusammenführen von ebenen Kanalwänden 9 so zu gestalten, dass sich spitze, strömungsgünstige Ein- und Ausläufe 12 ergeben.

Die Figuren 9 bis 12 zeigen mehrere vorteilhafte erfindungsgemäße Ausführungen von übereinander angeordneten Ein- und Ausströmkanälen mit eingelegten Spacerstrukturen 13. Für die Spacerstrukturen besteht ein großer Gestaltungsspielraum. So stellen die in Fig. 8 gezeigten wellenförmig ausgebildeten Spacerstrukturen 13 mit geraden durchlaufenden Wellenkämmen und -tälern erfindungsgemäße Strukturen dar. Die Richtung der Wellenkämme und -täler der eingelegten Wellenspacer ist in allen Abbildungen durch die Schraffur angedeutet. Fig. 9 bis 12 zeigen jeweils für die Einströmkanäle 8 und die Ausströmkanäle 4 die Strömungsführung. Fig. 9 zeigt die Strömungsführung für Fig. 1 und 2, Fig. 10 die Strömungsführung für Fig. 3 bis 5 sowie Fig. 11 und 12 zwei Alternativen für die Strömungsführung in Fig. 6 und 7. Dabei wechseln sich in Fig. 12 jeweils drei unterschiedliche Strömungsführungen nacheinander ab.

Bei allen Strömungsführungen bietet es sich an, den axialen Ein- bzw. Auslauf wie in Fig. 8 gezeigt, durch Zusammenführen von Kanalseitenwänden so zu gestalten, dass sich spitze, strömungsgünstige Ein- und Ausläufe 12 ergeben.

Um die Gleichverteilung der Strömung über jeden Kanalquerschnitt zu verbessern, können statt einer durchgehenden Wellenstruktur wie in Fig. 5 mehrere kürzere Wellenspacer erfindungsgemäß so hintereinander angeordnet werden, dass zwischen aufeinanderfolgenden Wellenspacern eine Querverteilung der Strömung stattfindet. Das ist schematisch in Fig. 13 dargestellt. Alternativ können andere Spacerstrukturen eingesetzt werden, die durch Öffnungen in den Wellstrukturen oder andere Formgebung einen Queraustausch innerhalb der Struktur ermöglichen.

In vergleichbarer Weise kann die Gleichverteilung der Durchströmung der Abgasreinigungsstrukturen 2 erfindungsgemäß dadurch verbessert werden, dass vor der ersten Abgasreinigungskomponente 2 eine geeignete Struktur zur Strömungsgleichverteilung angeordnet wird und/oder der am Eintritt angeordnete Oxidationskatalysator 2b in mehreren mit kurzem Zwischenraum hintereinander liegenden Scheiben angeordnet wird.

Das Kanalpaket 14 des Gegenstromwärmetauschers wird, wie im Querschnitt der Fig. 2 gezeigt, über den Umfang von einer gemeinsamen Isolations- und Abdichtungsschicht 16 und einem gemeinsamen Mantel 15 umschlossen, welche nur Öffnungen für die seitlichen Ein- bzw. Auslässe enthalten. Dabei erfolgt die Abdichtung der Zu- und Abströmöffnungen gegenüber dem Kanalpaket 14 durch weitgehend gasdichtes Isolationsmaterial 16 oder, wie auch in Fig. 8 angedeutet, durch temperaturbeständige Dichtschnüre oder Dichtmassen 17.

Wie aus den Querschnitten der Figuren 1 bis 7 erkenntlich, ist es ein Kennzeichen einer vorteilhaften Ausgestaltung der Erfindung, dass die Abgasreinigungseinheiten 2 und der Gegenstromwärmetauscher 3 in etwa den gleichen rechteckigen Querschnitt besitzen, sodass Sie hintereinander angeordnet und von Isolations- und Dichtmaterial 16 sowie einem gemeinsamen Mantel 15 umschlossen werden. Dabei ist es ein weiteres Kennzeichen einer vorteilhaften Ausgestaltung der Erfindung, dass die Strömungskanäle 6, 7, 19 und 20 so in den Mantel integriert sind, dass sie wie in Fig. 1 bis 7 entweder auf jeweils einer Seite oder paarweise auf gegenüberliegenden Seiten zwischen den jeweiligen Ein- und Austrittsöffnungen am Mantel entlang verlaufen.

Es ist ein weiteres Kennzeichen einer besonders vorteilhaften Ausgestaltung der Erfindung, dass die Strömungsführung der Abgasreinigungseinheit durch eine einzige Abgasumschalteinrichtung 1 verändert wird. Wie in Fig. 1 bis 5 gezeigt kann diese Umschalteinrichtung in Form einer Klappe gestaltet sein, die den Zugang zum direkten Strömungsweg 6 öffnet oder sperrt. Alternativ kann es sich um eine Doppelklappe wie in Fig. 6 und 7 handeln, die ebenfalls den Strömungsweg 6 öffnet oder verschließt aber dabei gleichzeitig den Zugang zu den Einströmkanälen 8 des Wärmetauschers 3 schließt oder öffnet.

Zusätzlich kann, insbesondere für die Abgasreinigung von Dieselmotoren mit thermischer Filterregeneration, eine weitere Abgasklappe 18 vorhanden sein, die eine zusätzliche Abgasabströmöffnung hinter allen Abgasreinigungseinheiten 2 oder vor der Reinigungseinheit zur Stickoxidumwandlung 2d öffnet oder schließt. In letzterem Fall bietet es sich an, die Reinigungseinheit zur Stickoxidumwandlung 2d in die Umgangskanäle 19 vor den seitlichen Zuläufen zu den Abströmkanälen 4 des Wärmetauschers 3 zu integrieren.

## Patentansprüche

1. Vorrichtung zur Abgasreinigung für Verbrennungskraftmaschinen, mit einer Steuereinheit, einer Umschalteinrichtung (1), einem Gegenstromwärmetauscher (3), wenigstens einer Abgasreinigungskomponente (2), und wenigstens zwei unterschiedlichen Strömungswegen, **dadurch gekennzeichnet, dass**
in Strömungsrichtung des Abgases hinter der Umschalteinrichtung (1) entweder die wenigstens eine Abgasreinigungskomponente (2) und der Gegenstromwärmetauscher (3) oder der Gegenstromwärmetauscher (3) und die wenigstens eine Abgasreinigungskomponente (2) hintereinander angeordnet sind,
wobei die Umschalteinrichtung (1), die wenigstens eine Abgasreinigungskomponente (2), der Gegenstromwärmetauscher (3) und die Strömungswege in einer kompakten Abgasbehandlungseinheit (5) integriert sind,
wobei wenigstens ein Strömungsweg als Umgang (7) oder als Strömungskanal(7') vom Eingang der Abgasreinigungseinheit (5) zum Zulauf der Einströmkanäle (8) des Gegenstromwärmetauschers (3) verläuft, und wobei wenigstens ein Strömungsweg als Umgang (20) bzw. Strömungskanal (20') vom Ausgang der Einströmkanäle (8) des Gegenstromwärmetauschers (3) zum Beginn der Abgasreinigungskomponenten (2) verläuft,
wobei die Umschalteinrichtung (1) zwischen zwei Positionen stetig oder sprungförmig verstellbar ist, wobei in einer ersten Position der Umschalteinrichtung (1) ein Umgang (6) bzw. ein Strömungskanal (6') des Abgases auf die wenigstens eine Abgasreinigungskomponente (2) freigegeben ist, und wobei in einer zweiten Position der Umschalteinrichtung (1) der Strömungsweg (6,6') des Abgases auf die wenigstens eine Abgasreinigungskomponente (2) versperrt ist, sodass das Abgas durch einen Umgang (7) oder einen Strömungskanal (7') in die Einströmkanäle (8) des Gegenstromwärmetauschers (3) einströmt, wo es sich aufheizt und von wo es über den Umgang (20) oder den Strömungskanal (20') der wenigstens einen Abgasreinigungskomponente (2) zugeführt wird und nach deren Passieren die Abgasreinigungseinheit (5) durch die Ausströmkanäle (4) des Gegenstromwärmetauschers (3) verlässt,
**dadurch gekennzeichnet, dass**
die wenigstens eine Abgasreinigungskomponente (2) und der Gegenstromwärmetauscher von Isolations- und Dichtmaterial (16,17) sowie einem gemeinsamen Mantel (15) umschlossen sind.

2. Vorrichtung nach Anspruch 1, **dadurch gekennzeichnet, dass** im Bereich des Eintritts des Abgases in die Abgasreinigungskomponente (2) eine elektrisch beheizbare inerte oder katalytisch beschichtete Komponente (2a) angeordnet ist, mit der während der Kaltstartphase solange Wärme in das Abgas eintragbar ist, bis die für die Verbrennung von Abgasschadstoffen notwendige Anspringtemperatur in der wenigstens einen nachfolgenden Abgasreinigungskomponente (2) überschritten ist.

3. Vorrichtung nach Anspruch 1 oder 2, **dadurch gekennzeichnet, dass** als Abgasreinigungskomponenten (2) mindestens ein Dieseloxidationskatalysator (2b) und ein Dieselpartikelfilter (2c) vorhanden sind, wobei der Gegenstromwärmetauscher (3) in Strömungsrichtung so vor den Abgasreinigungskomponenten (2) angeordnet ist, dass seine Einströmkanäle (8) ohne Strömungsumlenkung und mit strömungsgünstigem Ein- und/oder Auslauf durchströmt werden können, und dass die Umschalteinrichtung (1) das Abgas über einen Strömungsweg (6) direkt zu den Abgasreinigungskomponenten (2) führt, um die Einströmkanäle (8) des Gegenstromwärmetauschers (3) zu umgehen.

4. Vorrichtung nach Anspruch 3, **dadurch gekennzeichnet, dass** als weitere Abgasreinigungskomponenten (2) eine oder mehrere Entstickungskomponenten (2d) vorgesehen sind.

5. Vorrichtung nach Anspruch 4, **dadurch gekennzeichnet, dass** die wenigstens eine Entstickungskomponente (2d) in einem dem Dieseloxidationskatalysator (2b) und dem Dieselpartikelfilter (2c) nachgeschalteten Umgang (19) angeordnet ist.

6. Vorrichtung nach Anspruch 3, 4 oder 5, **dadurch gekennzeichnet,** dass nach dem Partikelfilter eine weitere Umschalteinrichtung (18) vorgesehen ist, die derart geöffnet werden kann, dass das Abgas nicht mehr ausschließlich durch den Umgang (19) sowie die Ausströmkanäle (4) des Wärmetauschers strömen muss, sondern die Abgasbehandlungseinheit auch direkt verlassen kann.

7. Vorrichtung nach einem der Ansprüche 1 bis 6, **dadurch** gekennzeichnet, **dass** der Gegenstromwärmetauscher (3) aus einem Kanalpaket (14) mit rechteckigem Querschnitt gebildet ist, in dem Einströmkanäle (8) und Ausströmkanäle (4) jeweils abwechselnd neben- bzw. übereinander angeordnet sind und der Zu- bzw. Abstrom für jede Kanalrichtung (4), (8) entweder axial über die Stirnfläche oder über seitliche Ein- bzw. Auslässe erfolgt, und wobei die Strömungsführung sowie der Wärmeübergang durch Profilierung der Wandungen der Einströmkanäle (8) und Ausströmkanäle (4) oder durch eingelegte profilierte Spacerstrukturen (13) verbessert wird, und wobei das Kanalpaket (14) umfangsseitig von einer gemeinsamen Isolations- und Abdichtungsschicht (16, 17) sowie einem gemeinsamen Mantel (15) umschlossen ist, sodass nur Ein-Austrittsöffnungen für die Strömungskanäle (4, 8) offen bleiben und wobei die Wände (9) benachbarter Strömungskanäle (4), (8) des Kanalpakets (14) an Zu- und/oder Austrittsöffnungen jeweils paarweise so zusammengeführt sind, sodass sich spitze, strömungsgünstige Ein- und/oder Ausläufe (12) ergeben.

8. Vorrichtung nach Anspruch 1 bis 7, wobei zumindest ein Teil der Umgänge(6, 7, 19, 20) so in den Mantel (15) integriert sind, dass sie zwischen den jeweiligen Ein-/Austrittsöffnungen an dem Mantel (15) entlang verlaufen.

9. Vorrichtung nach einem der Ansprüche 3 bis 7, **dadurch gekennzeichnet**, **dass** die Einströmkanäle (8) oder die Ausströmkanäle (4) des Gegenstromwärmetauschers (3) gerade und ohne Umlenkungen durch den Gegenstromwärmetauscher geführt werden.

10. Verfahren zur Abgasreinigung für Verbrennungskraftmaschinen mittels einer oder mehrerer gleichartiger Abgasreinigungseinheiten, in welche das die Verbrennungskraftmaschine verlassende Abgas eingeleitet wird, wobei das Abgas durch wenigstens eine Abgasreinigungskomponente (2) und einen Gegenstromwärmetauscher (3) hindurch geführt wird, wobei bei Kaltstart der Verbrennungskraftmaschine eine Steuereinheit eine Umschalteinrichtung (1) so einstellt, dass das Abgas auf direktem Strömungsweg (6) auf die wenigstens eine Abgasreinigungskomponente (2) geleitet wird, während durch entsprechende Steuerung der Verbrennungskraftmaschine ein schnelles Aufheizen des Abgases erfolgt , sodass sich die wenigstens eine Abgasreinigungskomponente (2) durch das Motorabgas und die katalytische Verbrennung der darin enthaltenen Abgaskomponenten schnell bis auf Betriebstemperatur aufheizt, wobei das aus der wenigstens einen Abgasreinigungskomponente (2) austretende Abgas direkt oder über einen Strömungsweg (19) in Ausströmkanäle (4) des Gegenstromwärmetauschers (3) geleitet wird, diese dabei aufheizt und von dort die Abgasreinigungseinheit (5) verlässt, wobei nach Erreichen der Betriebstemperatur der wenigstens einen Abgasreinigungskomponente (2) durch die Steuereinheit die Umschalteinrichtung (1) so eingestellt wird, dass der Strömungsweg (6 bzw. 6') des Abgases auf die wenigstens eine Abgasreinigungskomponente (2) versperrt wird, sodass das Abgas auf einem weiteren Strömungsweg (7 bzw. 7') in die Einströmkanäle (8) des Gegenstromwärmetauschers (3) geleitet wird, wo es sich aufheizt und von wo es über einen Strömungsweg (20 bzw. 20') der wenigstens einen Abgasreinigungskomponente (2) zugeführt wird und nach deren Passieren die Abgasreinigungseinheit (5) durch die Ausströmkanäle (4) des Gegenstromwärmetauschers (3) verlässt und dabei Wärme auf das zuströmende Abgas in den Einströmkanälen (8) überträgt, und wobei ein günstiger Betriebstemperaturbereich der wenigstens einen Abgasreinigungskomponente (2) dadurch aufrecht erhalten wird, dass Abgasschadstoffe an den Abgasreinigungskomponenten (2) in exothermen Reaktionen umgesetzt werden.

11. Verfahren nach Anspruch 10, **dadurch gekennzeichnet, dass** der direkte Strömungsweg (6) zu der wenigstens einen Abgasreinigungskomponente (2) durch die Steuereinheit und die Umschalteinrichtung (1) nach der Aufheizung der wenigstens einen Abgasreinigungskomponente (2) auf Betriebstemperatur wieder geöffnet wird, sobald die Temperatur des aus der Verbrennungskraftmaschine austretenden Abgases einen Schwellenwert überschreitet, der keine wärmerückgewinnung durch den Gegenstromwärmetauscher (3) erfordert.

12. Verfahren nach Anspruch 10 oder 11, **dadurch gekennzeichnet, dass** als Abgasreinigungskomponenten (2) ein Dieseloxidationskatalysator (2b) und ein Dieselpartikelfilter (2c) hintereinandergeschaltet oder ineinander integriert sind, wobei die Motorsteuerung durch Spät- oder Nacheinspritzung dafür sorgt, dass die Abgasreinigungskomponenten (2) in einem Temperaturbereich zwischen ca. 300 und 450°C betrieben werden, sodass die Regeneration des Dieselpartikelfilters (2c) zumindest überwiegend kontinuierlich mittels des an dem Dieseloxidationskatalysator (2b) gebildeten NO₂ erfolgt.

13. Verfahren nach Anspruch 12, **dadurch gekennzeichnet, dass** eine hinter dem Dieselpartikelfilter (2c) angeordnete Umschalteinrichtung (18) im Hochlastbereich der Verbrennungskraftmaschine so weit geöffnet ist, dass die Ausströmkanäle (4) des Gegenstromwärmetauschers (6) nur schwach durchströmt werden, und während der thermischen Regeneration des Dieselpartikelfilters (2c) sobald und so lange vollständig geöffnet wird, wie das aus dem Dieselpartikelfilter (2c) austretende Abgas Temperaturwerte aufweist, die zu einer Schädigung der wenigstens einen in dem Strömungskanal (19) angeordneten Reinigungskomponente (2d) oder der Ausströmkanäle (4) des Wärmetauschers führen können.

## Claims

1. Device for exhaust gas purification for internal combustion engines comprising a control unit, a switching device (1), a counter-current heat exchanger (3), at least one exhaust gas purification component (2), and at least two different flow paths,
**characterized in that**
in the flow direction of the exhaust gas downstream of the switching device (1) either the at least one exhaust gas purification component (2) and the counter-current heat exchanger (3) or the counter-current heat exchanger (3) and the at least one exhaust gas purification component (2) are arranged in succession,
wherein the switching device (1), the at least one exhaust gas purification component (2), the counter-current heat exchanger (3) and the flow paths are integrated in a compact exhaust gas treatment unit (5),
wherein at least one flow path runs as a diversion (7) or as a flow channel (7') from the entry of the exhaust gas treatment unit (5) to the entry of the inlet channels (8) of the counter-current heat exchanger (3), and wherein at least one flow path runs as a diversion (20) or as a flow channel (20') from the exit of the inlet channels (8) of the counter-current heat exchanger (3) to the start of the exhaust gas purification components (2),
wherein the switching device (1) may be adjusted between two positions continuously or abruptly, wherein in a first position of the switching device (1) a diversion (6) or a flow channel (6') of the exhaust gas to the at least one exhaust gas purification component (2) is opened and wherein in a second position of the switching device (1) the flow path (6,6') of the exhaust gas to the at least one exhaust gas purification component (2) is blocked, so that the exhaust gas flows through a diversion (7) or a flow channel (7') in the inlet channels (8) of the counter-current heat exchanger (3), where it is heated and from where it is conveyed via the diversion (20) or a flow channel (20') to the at least one exhaust gas purification component (2) and after passing said exhaust gas purification component leaves the exhaust gas purification unit (5) through the outlet channels (4) of the counter-current heat exchanger (3), and
**characterized in that**
the at least one exhaust gas purification component (2) and the counter-current heat exchanger (3) are enclosed by an insulating and sealing material (16,17) as well as by a common casing (15).

2. Device according to claim 1, **characterized in that** an electrically heatable inert or catalytically coated component (2a) is arranged in the region of the inlet of the exhaust gas into the exhaust gas purification component (2), by which during the cold start phase heat is able to be introduced into the exhaust gas until the light-off temperature required for the combustion of exhaust gas pollutants in the at least one downstream exhaust gas purification component (2) is exceeded.

3. Device according to claim 1 or 2, **characterized in that** at least one diesel oxidation catalytic converter (2b) and a diesel particulate filter (2c) are present as exhaust gas purification components (2), wherein the counter-current heat exchanger (3) is arranged in the direction of flow upstream of the exhaust gas purification components (2) such that exhaust gas may flow through its inlet channels (8) without flow deflection and with a streamlined inlet and/or outlet, and such that the switching device (1) guides the exhaust gas via a flow path (6) directly to the exhaust gas purification components (2), in order to bypass the inlet channels (8) of the counter-current heat exchanger (3).

4. Device according to claim 3, **characterized in that** one or more nitrogen-removing components (2d) are provided as further exhaust gas purification components (2).

5. Device according to claim 4, **characterized in that** the at least one nitrogen-removing component (2d) is arranged in a diversion (19) downstream of the diesel oxidation catalytic converter (2b) and the diesel particulate filter (2c).

6. Device according to claim 3, 4 or 5, **characterized in that** a further switching device (18) is provided downstream of the particulate filter which may be opened such that the exhaust gas no longer has to flow exclusively through the diversion (19) and the outlet channels (4) of the heat exchanger, but can also leave the exhaust gas treatment unit directly.

7. Device according to one of claims 1 to 6, **characterized in that** the counter-current heat exchanger (3) is formed from a channel assembly (14) of rectangular cross section, in which inlet channels (8) and outlet channels (4) in each case are alternately arranged adjacent to and/or above one another, and the inflow and/or outflow for each channel direction (4), (8) takes place either axially via the front face or via lateral inlets and/or outlets, and wherein the flow guide and the heat transfer is improved by profiling the walls of the inlet channels (8) and outlet channels (4) or by inserted profiled spacer structures (13) and wherein the channel assembly (14) is enclosed on the periphery by a common insulating and sealing layer (16, 17) as well as a common casing (15), so that only inlet-outlet openings for the flow channels (4, 8) remain open and wherein the walls (9) of adjacent flow channels (4), (8) of the channel assembly (14) on inlet and/or outlet openings are combined in each case in pairs so that sharp, streamlined inlets and/or outlets (12) are produced.

8. Device according to one of claims 1 to 7, wherein at least some of the diversions (6, 7, 19, 20) are integrated in the casing (15) such that said flow channels extend along the casing (15) between the respective inlet/outlet openings.

9. Device according to one of claims 3 to 7, **characterized in that** the inlet channels (8) or the outlet channels (4) of the counter-current heat exchanger (3) are guided in a linear manner and without deflections through the counter-current heat exchanger.

10. Method for exhaust gas purification for internal combustion engines by means of one or more similar exhaust gas purification units in which the exhaust gas leaving the internal combustion engine is introduced, wherein the exhaust gas is guided through at least one exhaust gas purification component (2) and a counter-current heat exchanger (3), wherein during cold start of the internal combustion engine, a control unit adjusts a switching device (1) such that the exhaust gas is conveyed on a direct flow path (6) to the at least one exhaust gas purification component (2), whilst by corresponding control of the internal combustion engine a rapid heating of the exhaust gas takes place, so that the at least one exhaust gas purification component (2) is rapidly heated by the engine exhaust gas and the catalytic combustion of the exhaust gas components contained therein up to operating temperature, wherein the exhaust gas emerging from the at least one exhaust gas purification component (2) is directly conveyed, or via a flow path (19), in outflow channels (4) of the counter-current heat exchanger (3), heats said outflow channels and from there leaves the exhaust gas purification unit (5), wherein, after the at least one exhaust gas purification component (2) reaches the operating temperature, the switching device (1) is adjusted by the control unit such that the flow path (6 or 6') of the exhaust gas is blocked to the at least one exhaust gas purification component (2), so that the exhaust gas is conveyed on a further flow path (7 or 7') into the inlet channels (8) of the counter-current heat exchanger (3), where it is heated and from where it is guided via a flow path (20 or 20') of the at least one exhaust gas purification component (2) and after passing said exhaust gas purification component, leaves the exhaust gas purification unit (5) through the outlet channels (4) of the counter-current heat exchanger (3) and thus transfers heat to the inflowing exhaust gas into the inlet channels (8) and wherein a favorable operating temperature range of the at least one exhaust gas purification component (2) is maintained by exhaust gas pollutants being converted on the exhaust gas purification components (2) in exothermic reactions.

11. Method according to claim 10, **characterized in that** the direct flow path (6) to the at least one exhaust gas purification component (2) through the control unit and the switching device (1) after heating the at least one exhaust gas purification component (2) to operating temperature is opened again as soon as the temperature of the exhaust gas emerging from the internal combustion engine exceeds a threshold value, which does not require heat recovery by the counter-current heat exchanger (3).

12. Method according to claim 10 or 11, **characterized in that** a diesel oxidation catalytic converter (2b) and a diesel particulate filter (2c) as exhaust gas purification components (2) are arranged in succession or integrated within one another, wherein the engine control unit ensures by retarded injection or post-injection that the exhaust gas purification components (2) are operated in a temperature range of between ca. 300 and 450°C, so that the regeneration of the diesel particulate filter (2c) takes place at least substantially continuously by means of the NO₂ formed on the diesel oxidation catalytic converter (2b).

13. Method according to claim 12, **characterized in that** a switching device (18) arranged downstream of the diesel particulate filter (2c) is opened in the high load range of the internal combustion engine sufficiently far that exhaust gas only flows through the outlet channels (4) of the counter-current heat exchanger (6) slightly, and during the thermal regeneration of the diesel particulate filter (2c) is fully opened as soon as and as long as the exhaust gas emerging from the diesel particulate filter (2c) has temperature values which may lead to damage of the at least one purification component (2d) arranged in the flow channel (19) or of the outlet channels (4) of the heat exchanger.

## Revendications

1. Dispositif de purification de gaz d'échappement pour un moteur à combustion interne, pourvu d'une unité de commande d'une installation d'inversion (1), d'un échangeur de chaleur à contre-courant (3), d'au moins un composant de purification de gaz d'échappement (2) et d'au moins deux circuits différents de cheminement de flux,
**caractérisé en ce que**,
dans la direction de circulation du flux des gaz d'échappement, en aval de l'installation d'inversion (1), soit ledit au moins un composant de purification de gaz d'échappement (2) et l'échangeur de chaleur à contre-courant (3), soit l'échangeur de chaleur à contre-courant (3) et ledit au moins un composant de purification de gaz d'échappement (2) sont disposés l'un derrière l'autre,
dans lequel l'installation d'inversion (1), ledit au moins un composant de purification de gaz d'échappement (2), l'échangeur de chaleur à contre-courant (3), et les circuits de cheminement de flux sont intégrés dans une unité compacte de traitement de gaz d'échappement (5),
dans lequel au moins un des circuits de cheminement de flux, s'étend à titre de dérivation (7) ou de canal de circulation (7') entre l'entrée de l'unité compacte de traitement de gaz d'échappement (5), vers l'embouchure des canaux unidirectionnels (8) de l'échangeur de chaleur à contre-courant (3), et dans lequel au moins un circuit de cheminement de flux s'étend, à titre de dérivation (20) respectivement à titre de canal de circulation (20') de la sortie des canaux unidirectionnels (8) de l'échangeur de chaleur à contre-courant (3) vers le début des composants de purification de gaz d'échappement (2),
dans lequel l'installation de commande d'inversion (1) peut être déplacée en continu ou alternativement entre deux positions, dans lequel, dans une première position de l'installation d'inversion (1), une dérivation (6), respectivement un canal de circulation (6') des gaz d'échappement est libérée vers ledit au moins un composant de purification de gaz d'échappement (2) et dans lequel, dans une seconde position de l'installation d'inversion (1), le circuit de flux (6, 6') des gaz d'échappement sur ledit au moins un composant de purification de gaz d'échappement (2) est verrouillé, de telle manière que l'échappement s'effectue à travers une dérivation (7) ou à travers un canal de circulation (7') dans les canaux unidirectionnels (8) de l'échangeur de chaleur à contre-courant (3), où il est échauffé et où il est conduit à travers la dérivation (20) ou le canal de circulation (20') dudit au moins un composant de purification de gaz d'échappement (2) et, après le passage à travers l'unité de traitement de gaz d'échappement (5), est libéré à travers les canaux d'échappement (4) de l'échangeur de chaleur à contre-courant (3),
**caractérisé en ce que**
ledit au moins un composant de purification de gaz d'échappement (2) et l'échangeur de chaleur à contre-courant (3), sont entourés de matériaux isolants et d'étanchéité (16, 17) ainsi que d'un manteau commun (15).

2. Dispositif selon la revendication 1, **caractérisé en ce que** dans le secteur de l'entrée des gaz d'échappement et du composant de purification de gaz d'échappement (2), est disposé un composant (2a) inerte ou revêtu d'une couche catalytique, pouvant être chauffé électriquement, avec lequel, pendant la phase de démarrage à froid, aussi longtemps que de la chaleur on peut incorporer dans le gaz, jusqu'au moment où la température de déclenchement, requise dans ledit au moins un composant de purification de gaz d'échappement (2), est dépassée pour assurer la combustion de substances nocives présentes dans les gaz d'échappement.

3. Dispositif selon les revendications 1 ou 2, **caractérisé en ce que** au moins un catalyseur d'oxydation de carburant Diesel (2b) et un filtre à particules pour carburant Diesel (2c) sont présents comme composant de purification de gaz d'échappement (2), dans lequel l'échangeur de chaleur à contre-courant (3) est disposé dans les sens du flux avant les composants de purification de gaz d'échappement (2),de sorte que ses canaux unidirectionnels (8) puissent être traversés sans déviation et avec une circulation entrante et sortante efficace et que l'installation d'inversion (1) amène le gaz d'échappement par un circuit de dérivation (6) directement vers les composants de purification de gaz d'échapperment (2) en vue de contourner les canaux unidirectionnels (8) de l'échangeur de chaleur à contre-courant (3).

4. Dispositif selon la revendication 3, **caractérisé en ce que**, à titre d'autres composants de purification de gaz d'échappement (2), on prévoit un ou plusieurs composants de prévention d'asphyxie (2d).

5. Dispositif selon la revendication 4, **caractérisé en ce que** ledit au moins un composant de prévention d'asphyxie (2d) est monté dans une dérivation (19) connectée à la suite du catalyseur d'oxydation de carburant Diesel (2b) et du filtre à particules pour carburant Diesel (2c).

6. Dispositif selon les revendications 3, 4 ou 5, **caractérisé en ce que**, après le filtre à particules pour carburant Diesel (2c), est prévue une nouvelle commande de dérivation (18), qui peut être ouverte de telle manière que l'échappement ne se fait plus exclusivement à travers la dérivation (19) ainsi que par les canaux d'évacuation (4), mais que l'unité de traitement des gaz puisse également les évacuer directement.

7. Dispositif selon l'une quelconque des revendications 1 à 6, **caractérisé en ce que** l'échangeur de chaleur à contre-courant (3) est constitué d'un paquet de canaux (14) de section rectangulaire, dans lequel les canaux unidirectionnels (8) et les canaux d'évacuation (4) sont respectivement et alternativement cote à cote et superposés et le flux entrant, respectivement sortant de chacun des canaux (4), (8) circule soit axialement par une surface frontale ou par des amenées ou des évacuations latérales, et dans lequel le guidage des flux ainsi que le transfert de chaleur sont améliorés à travers des parois profilées des canaux unidirectionnels (8) et des canaux d'évacuation (4) ou par des structurations profilées rapportées (13) et dans lequel le paquet de canaux (14) est globalement entouré d'une couche commune d'isolation et d'étanchéité (16, 17) ainsi que d'un manteau commun (15), de telle manière qu'un seul orifice d'entrée et de sortie restent ouverts pour les canaux de circulation des flux (4, 8) et dans lequel les parois (9) forment des canaux de circulation de flux pouvant être revêtus (4), (8) du paquet de canaux (14) et sont couplés par paires à des ouvertures d'amenée et/ou de sortie, de sorte que se forment des maxima favorables de flux d'entrée et/ou d'évacuation (12).

8. Dispositif selon les revendications 1 à 7, **caractérisé en ce que** au moins une partie des dérivations (6, 7, 19, 20) est intégrée dans le manteau (15), de telle manière qu'elle se situe entre les ouvertures respectives d'entrée et de sortie, le long du manteau (15).

9. Dispositif selon l'une quelconque des revendications 3 à 7, **caractérisé en ce que** les canaux unidirectionnels (8) ou les canaux d'évacuation (4) de l'échangeur de chaleur à contre-courant (3) sont disposés de façon rectiligne et sans dérivation à travers l'échangeur de chaleur à contre-courant.

10. Procédé de purification de gaz d'échappement pour un moteur à combustion interne, au moyen d'un ou de plusieurs dispositifs de purification de gaz d'échappement dans lesquels on amène les gaz d'échappement du moteur à combustion interne, dans lequel les gaz d'échappement sont conduits à travers au moins un composant de purification de gaz d'échappement (2) et un échangeur de chaleur à contre-courant (3), dans lequel, lors du démarrage à froid du moteur à combustion interne, une unité de commande règle une installation d'inversion (1), de telle manière que le gaz d'échappement est dirigé sur un cheminement direct (6) sur le composant de purification de gaz d'échappement (2), tandis que, par une commande appropriée du moteur à combustion interne, une rapide élévation de la température des gaz d'échappement est engendrée de telle manière que ledit au moins un composant de purification de gaz d'échappement (2) est monté rapidement à la température d'utilisation, par les gaz d'échappement et par la combustion catalytique des composants qui y sont contenus, dans lequel le gaz d'échappement issu dudit au un composant de purification de gaz d'échappement (2) est dirigé directement ou à travers une dérivation de flux (19) dans des canaux d'échappement (4) de l'échangeur de chaleur à contre-courant (3), qui est échauffé en conséquence et quitte l'unité de traitement de gaz d'échappement (5), dans lequel, lorsque la température de fonctionnement dudit au moins un composant de purification de gaz d'échappement (2) est atteinte, l'installation d'inversion (1) est réglée de telle manière que le cheminement de flux (6 ou 6') du gaz d'échappement est verrouillé sur ledit au moins un composant de purification de gaz d'échappement (2), de sorte que le gaz d'échappement est dirigé vers d'autres circuits de flux (7, respectivement 7') dans les canaux unidirectionnels (8) de l'échangeur de chaleur à contre-courant (3), où il est réchauffé et d'où il est conduit, par l'intermédiaire d'un circuit de flux (20, respectivement 20') dudit au un composant de purification de gaz d'échappement (2) et d'où, après ce passage, il quitte l'unité de traitement de gaz d'échappement (5) par les canaux d'évacuation (4) de l'échangeur de chaleur à contre-courant (3) et transmet de la chaleur au gaz d'échappement entrant dans les canaux unidirectionnels (8), et maintient ainsi un régime de température de fonctionnement plus propice du composant de purification de gaz d'échappement (2), pour que les substances nocives des gaz d'échappement dans le composant de purification de gaz d'échappement (2) soient transformés au cours d'une réaction exothermique.

11. Procédé selon la revendication 10, **caractérisé en ce que** le circuit direct du flux (6) vers ledit au moins un composant de purification de gaz d'échappement (2) est à nouveau ouvert par l'unité de commande et l'installation d'inversion (1) après le réchauffement dudit au moins un composant de purification de gaz d'échappement (2) et la commutation à la température de fonctionnement, aussitôt que le gaz d'échappement issu du moteur à combustion interne dépasse une valeur seuil, qui ne génère pas d'accroissement de chaleur par l'échangeur de chaleur à contre-courant (3).

12. Procédé selon les revendications 10 ou 11, **caractérisé en ce que**, à titre de composant de purification de gaz d'échappement (2) un catalyseur d'oxydation de carburant Diesel (2b) et un filtre à particules pour carburant Diesel (2c) sont connectés l'un derrière l'autre ou intégrés l'un dans l'autre, dans lequel la commande du moteur par injection retardée ou postérieure est agencée pour que le composant de purification de gaz d'échappement (2) est actionné dans un registre de températures compris entre environ 300°C et 450°C, de telle manière que la régénération du filtre à particules de Diesel (2c) s'effectue au moins en prépondérance en continu au moyen du NO₂ produit par le catalyseur d'oxydation de carburant Diesel (2b).

13. Procédé selon la revendication 12, **caractérisé en ce qu'**une installation d'inversion (18), montée à la suite du filtre à particules pour carburant Diesel (2c) en cas charge élevée du moteur à combustion interne, est ouverte de telle manière que les canaux unidirectionnels (4) de l'échangeur de chaleur à contre courant (6) ne sont que faiblement traversés par le flux, et, pendant la régénération thermique du filtre à particules pour carburant Diesel (2c) sont ouverts entièrement, aussitôt et aussi longtemps que le gaz d'échappement issus du filtre à particules (2c) présente des caractéristiques thermiques pouvant nuire audit au moins un composant de purification (2d) disposé dans le canal de flux (19) ou aux canaux d'échappement (4) de l'échangeur de chaleur.
